# NEUE EUROPÄISCHE PATENTSCHRIFT

(11) **EP 2 580 716 B2**
(45) Veröffentlichungstag und Bekanntmachung des Hinweises auf die Entscheidung über den Einspruch: **19.01.2022**
(45) Hinweis auf die Patenterteilung: 27.03.2019
(21) Anmeldenummer: 11721276.1
(22) Anmeldetag: 12.05.2011
(51) Int. Cl.: G07F 11/02, G06Q 10/08, G06K 7/01

(54) **BESTANDÜBERWACHUNG VON DURCHLAUFLAGERN MITTELS RFID**
MONITORING THE STOCK IN FLOW RACKS USING RFID
SURVEILLANCE DU STOCK DE MAGASINS DE TRANSIT RFID

(30) Priorität: 11.06.2010 DE 102010029996
(43) Veröffentlichungstag der Anmeldung: 17.04.2013
(73) Patentinhaber: BROOKS Automation (Germany) GmbH, 95490 Mistelgau (DE)
(72) Erfinder: DITTRICH, Gerald, 95349 Thurnau (DE); LORENZ, Alexander, 07907 Schleiz (DE)
(74) Vertreter: DehnsGermany Partnerschaft von Patentanwälten
(86) Internationale Anmeldenummer: PCT/EP2011/057690
(87) Internationale Veröffentlichungsnummer: WO 2011/154213

(56) Entgegenhaltungen:
- WO-A1-2009/143814
- WO-A1-2009/152139
- DE-A1- 19 714 799
- FR-A1- 2 885 435
- JP-B2- 4 140 136
- US-A1- 2008 186 167

## Beschreibung

Die vorliegende Erfindung beschreibt die automatische Bestandüberwachung von Durchlauflagern mittels eines Radiofrequenz-Identifikations-Kommunikationssystems (RFID-Kommunikationssystem).

Durchlauflager sind Lagereinrichtungen, die u. a. mittels geführter Rollwägen auf Durchlaufbahnen oder mittels Rollbahnen auf Durchlaufregalen mit Waren bestückt werden. Beim Einsatz von Durchlaufregalen werden die Regale von einer Seite aus bestückt, indem die Waren in Behältern oder auf Paletten auf die Rollbahnen der Durchlaufregale verbracht werden, während von der anderen Seite aus die vorher eingelagerten Waren wieder entnommen werden können. Im Unterschied zur Variante mit Durchlaufregalen werden die Waren bei Durchlaufbahnen auf Rollwagen in rollbaren Behältern oder auf rollbaren Paletten verschoben.

RFID-Kommunikationssysteme für Lagerlogistik umfassen in der Regel ein RFID-Gerät zum Auslesen und/oder Beschreiben eines Transponders, der an den Gegenständen, Produkten, Behältern bzw. Paletten angebracht ist. An das RFID-Gerät ist dafür eine Antenne elektrisch angeschlossen, die entweder fest in das RFID-Gerät integriert ist, oder als externes Gerät genutzt wird. Zur Kommunikation mit dem Transponder erzeugt die Antenne des RFID-Geräts ein elektromagnetisches Feld im Radiofrequenzbereich, das in einer Antenne des Transponders eine Spannung induziert. Dabei werden typischerweise folgende Frequenzbereiche und Reichweiten genutzt.

| **Frequenztyp** | **Frequenzbereich** | **Typische Reichweite** |
|---|---|---|
| Langwellen-Frequenzen (LF) | 30...300 kHz | 50 cm |
| Kurzwellen-Frequenzen (HF/RF) | 3...30 MHz | 1 m |
| Dezimeterwellen (UHF) | 0,3 ... 3 GH_{z} | 3-15 m |

Damit können einerseits Daten zwischen dem RFID-Gerät und dem Transponder übertragen werden, andererseits wird dadurch der Transponder mit Energie versorgt. RFID -Kommunikationssysteme besitzen zahlreiche Anwendungsmöglichkeiten, wie z.B. automatische Datenerfassung oder automatische Objektidentifikation. Mögliche Einsatzgebiete sind dabei die Verkehrsüberwachung, Kontrolle von Produktionslogistik, die Identifizierung von Personen oder die Echtheitszertifizierung von Banknoten.

Gegenwärtige Lagerungssysteme nutzen RFID -Kommunikation, um an der Ausgabeseite von Durchlauflagern die Entnahme von Waren zu registrieren und damit den Warenbestand zu erfassen und zu kontrollieren. Hierzu werden die mit einem RFID-Transponder versehenen Waren beim Verlassen des Durchlauflagers an einem stationären RFID-Gerät mit Antenne vorbeigeführt, um die im Transponder gespeicherte Kennung auszulesen. Auf diese Weise wird der Warenausgang automatisch erfasst und in einem Logistiksystem entsprechend verbucht.

Der Nachteil des im Vorgang erläuterten Stands der Technik besteht allerdings darin, dass lediglich die Ausgabeseite mit einem RFID -Scanner bedient wird, während für die Eingabeseite kein RFID-Scanner vorgesehen ist. Da also beim Eingabeprocedere der Behälter oder die Palette keine Identifizierung stattfindet, kann nicht überprüft werden, ob der Behälter oder die Palette überhaupt für diese(s) Durchlaufregal oder - bahn vorgesehen ist. Es besteht daher das Risiko, dass der Lagerbestand mit Fehlstücken bestückt wird, die später mühsam aussortiert werden müssen und damit die Lagerlogistik erschweren.

Die Druckschrift WO 2009/143814 offenbart ein RFID-Kommunikationssystem zur Bestandsüberwachung eines Durchlauflagers, umfassend: mindestens eine erste und eine zweite stationäre RFID-Antenne zum Senden und Empfangen von Daten, einen an einem Gegenstand oder einer Gruppe von Gegenständen angebrachten RFID-Transponder, wobei der RFID-Transponder mindestens eine Kennung des Gegenstands oder der Gruppe von Gegenständen elektronisch speichert, wobei die zweite RFID-Antenne an einem Ausgabebereich einer Lagerstrecke des Durchlauflagers platziert ist, um den Gegenstand oder die Gruppe von Gegenständen anhand der Kennung des RFID-Transponders zu erfassen.

Die Druckschrift JP 4 140136 B2 offenbart die Anordnung eines Sensors im Eingangsbereich des Durchgangslagers.

Die Druckschrift DE 197 14 799 A1 offenbart die Anordnung eines Sensors im Eingangsbereich eines Durchgangslagers. Weiterhin offenbart sie einen Detektor, der ein elektrisches Signal erzeugt, wenn eine Lagereinheit in einer Lagerpostion angeordnet ist.

Es ist daher die Aufgabe der vorliegenden Erfindung, den Stand der Technik zu verbessern. Insbesondere ist es Aufgabe der vorliegenden Erfindung, eine automatische Bestandüberwachung eines Durchlauflagers mittels eines RFID- Kommunikationssystems bereitzustellen, das die Lagerverwaltung umfassend automatisiert und den Lagerbestand automatisch aktualisiert und optimiert.

Die Aufgabe wird durch ein Radiofrequenz-Identifikations-Kommunikationssystem, RFID-Kommunikationssystem, zur Bestandüberwachung eines Durchlauflagers gemäß Anspruch 1 gelöst.

Das erfindungsgemäße RFID-Kommunikationssystem umfasst mindestens eine erste und eine zweite stationäre RFID-Antenne zum Senden und Empfangen von Daten und einen an einem Gegenstand oder einer Gruppe von Gegenständen angebrachten RFID-Transponder, wobei der RFID-Transponder mindestens eine Kennung des Gegenstands oder der Gruppe von Gegenständen elektronisch speichert, und wobei die erste RFID-Antenne an einem Eingabebereich und die zweite RFID-Antenne an einem Ausgabebereich einer Lagerstrecke des Durchlauflagers platziert sind, um den Gegenstand oder die Gruppe von Gegenständen anhand der Kennung des RFID-Transponders zu erfassen.

Das erfindungsgemäße RFID-Kommunikationssystem ermöglicht es daher, dass Waren erfasst werden, bevor sie in den Lagerbestand aufgenommen werden. Dazu werden die mit einem RFID-Transponder versehenen Gegenstände, Produkte, Waren bzw. Behälter in die Eingabe gestellt und durch eine stationäre, eingangsseitige RFID-Antenne identifiziert, indem die in dem Transponder gespeicherten Identifizierungsdaten (Kennung) ausgelesen werden. Dadurch wird einerseits vermieden, dass falsche Artikel in den Lagerbestand aufgenommen werden und andererseits kann bei Entnahme von Artikeln eine automatische Nachbestellung erfolgen, da durch den Eingangsscan Informationen über den Lagerbestand in der jeweiligen Lagerstrecke vorliegen. Als Folge wird die Lagerlogistik entlastet und unnötige Bestellungen werden vermieden.

Um den Bedürfnissen der jeweiligen Lagerlogistik zu entsprechen, sind die RFID-Antennen jederzeit demontierbar, um sie an geeigneter anderer Stelle im Lager wieder aufzubauen.

In einer ersten Ausführungsform besteht der Gegenstand oder die Gruppe von Gegenständen aus Behältern oder Paletten, wobei die Lagerstrecke aus einem Regal mit einer Rollbahn besteht, um die Behälter oder Paletten aufzunehmen.

In einer zweiten Ausführungsform besteht der Gegenstand oder die Gruppe von Gegenständen aus Rollwägen, wobei die Lagerstrecke aus einer Bahn besteht, um darin die Rollwägen zu verschieben und zu lagern.

Erfindungsgemäß umfasst das erfindungsgemäße RFID-Kommunikationssystem weiterhin mindestens einen Präsenzsensor, um die Präsenz eines Gegenstandes oder einer Gruppe von Gegenständen im Ein- und Ausgabebereich der Lagerstrecke zu erfassen.

Erfindungsgemäß sind ein erster Präsenzsensor am Eingabebereich und ein zweiter Präsenzsensor am Ausgabebereich der Lagerstrecke des Durchlauflagers platziert.

Weiterhin erfindungsgemäß wird der Lesemodus der RFID- Antennen zum Erfassen der RFID-Transponder nur dann aktiviert, wenn die Präsenzsensoren eine Änderung melden.

Erfindungsgemäß werden der Gegenstand oder die Gruppe von Gegenständen im Eingabebereich durch eine Halteeinrichtung solange gehalten, bis diese mittels der Kennung des RFID-Transponders identifiziert sind.

Vorteilhafterweise sind der Gegenstand oder die Gruppe von Gegenständen anhand der Kennung des RFID-Transponders dahingehend prüfbar, ob der Gegenstand oder die Gruppe von Gegenständen für die Lagerstrecke zugelassen sind.

Weiterhin vorteilhafterweise kann die Halteeinrichtung den Gegenstand oder die Gruppe von Gegenständen je nach Ergebnis der Prüfung freigeben oder blockieren.

Vorteilhafterweise wird ein Lagerbestand der Lagerstrecke erhöht, wenn die Halteeinrichtung den Gegenstand oder die Gruppe von Gegenständen freigibt.

Vorteilhafterweise wird im Gegenzug der Lagerbestand der Lagerstrecke reduziert, wenn der Gegenstand oder die Gruppe von Gegenständen der Lagerstrecke nach Passieren der zweiten RFID-Antenne entnommen wird.

Vorteilhafterweise wird die Entnahme dadurch erkennbar, dass der RFID-Transponder nicht mehr lesbar ist und / oder der Präsenzsensor eine Änderung meldet.

Vorteilhafterweise kann die Halteeinrichtung aus einem mechanischen Bolzen oder einem Magneten bestehen.

Weiterhin vorteilhafterweise kann das RFID-Kommunikationssystem eine Rückmeldung erzeugen, wenn die erste RFID-Antenne den Gegenstand oder die Gruppe von Gegenständen identifiziert hat, wobei idealerweise eine Rückmeldung über ein akustisches oder optisches Signal erfolgt.

Vorteilhafterweise kann das RFID-Kommunikationssystem eine Rückmeldung erzeugen, wenn die zweite RFID-Antenne den Gegenstand oder die Gruppe von Gegenständen identifiziert hat, wobei idealerweise eine Rückmeldung über ein akustisches oder optisches Signal erfolgt.

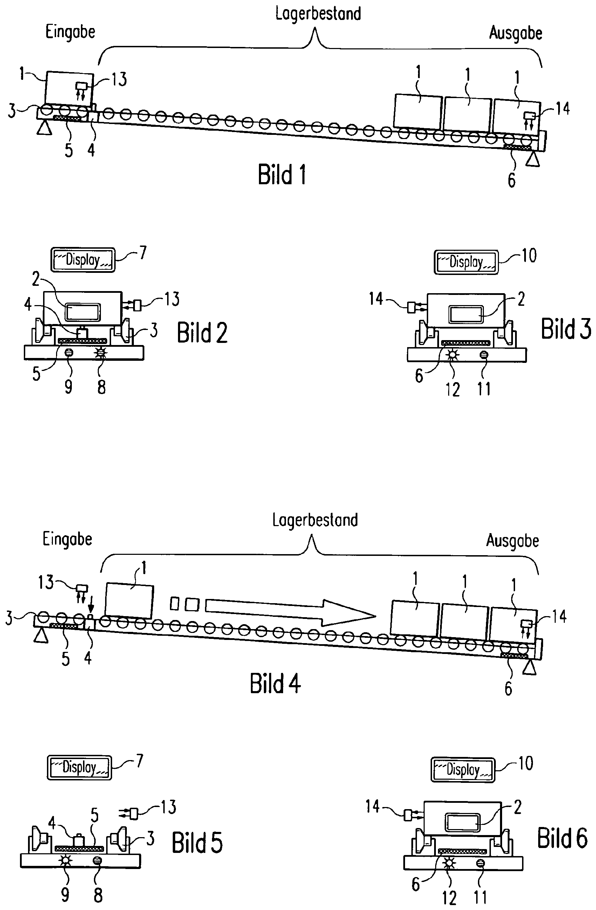

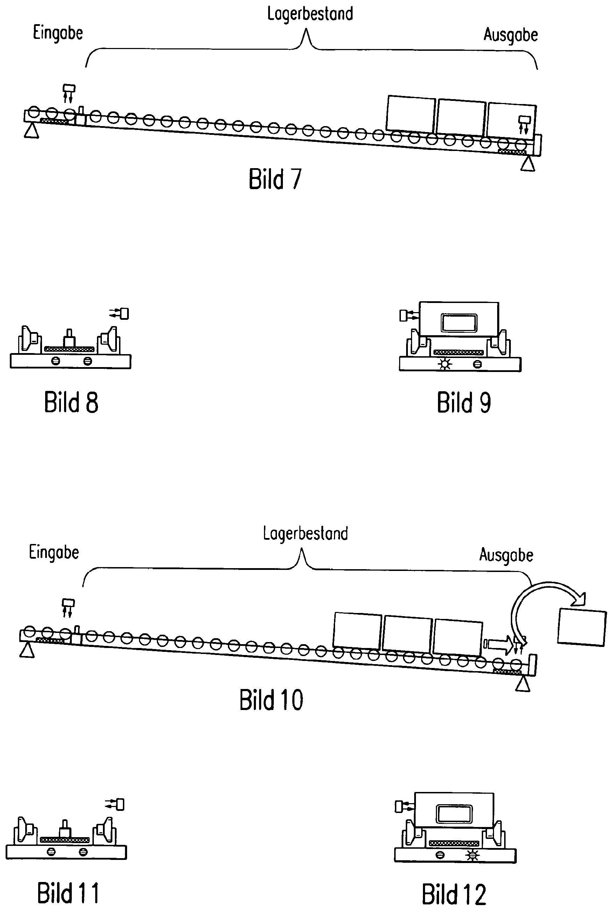

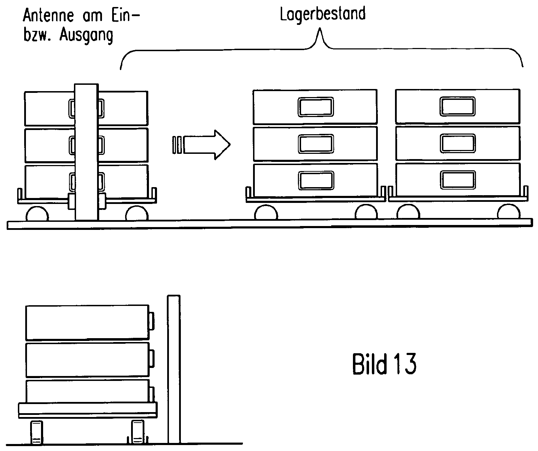

Die vorliegende Erfindung wird im Folgenden anhand der zwei eingangs erwähnten bevorzugten Ausführungsformen in Bezug auf die beigefügten Figuren 1-13 näher erläutert.
Bild 1 zeigt die erste Ausführungsform der Erfindung als typische Rollenbahn eines Durchlaufregals für Behälter
Bild 2 zeigt verschiedene Beispiele für eingabeseitige Rückmeldungsvorrichtungen
Bild 3 zeigt verschiedene Beispiele für ausgabeseitige Rückmeldungsvorrichtungen
Bild 4 zeigt eine typische Rollenbahn eines Durchlaufregals für Behälter für den Fall, dass ein korrekter Behälter eingelegt wurde.
Bild 5 zeigt verschiedene Beispiele für eingabeseitige Rückmeldungsvorrichtungen für den Fall, dass ein korrekter Behälter eingelegt wurde.
Bild 6 zeigt verschiedene Beispiele für ausgabeseitige Rückmeldungsvorrichtungen für den Fall, dass ein korrekter Behälter eingelegt wurde.
Bild 7 zeigt eine typische Rollenbahn eines Durchlaufregals für Behälter, die bereit zur Ausgabe sind, nachdem der vorderste Artikel registriert wurde.
Bild 8 zeigt verschiedene Beispiele für eingabeseitige Rückmeldungsvorrichtungen für den Fall, dass die Behälter im Lagerbestand bereit zur Ausgabe sind.
Bild 9 zeigt verschiedene Beispiele für ausgabeseitige Rückmeldungsvorrichtungen für den Fall, dass die Behälter im Lagerbestand bereit zur Ausgabe sind.
Bild 10 zeigt eine typische Rollenbahn eines Durchlaufregals für Behälter, die nicht bereit zur Ausgabe sind, nachdem der vorderste Artikel nicht registriert wurde.
Bild 11 zeigt verschiedene Beispiele für eingabeseitige Rückmeldungsvorrichtungen für den Fall, dass der vorderste Behälter im Lagerbestand nicht bereit zur Ausgabe ist.
Bild 12 zeigt verschiedene Beispiele für ausgabeseitige Rückmeldungsvorrichtungen für den Fall, dass der vorderste Behälter im Lagerbestand nicht bereit zur Ausgabe ist.
Bild 13 zeigt eine zweite Ausführungsform der Erfindung, wobei die Waren in Rollwägen statt als Container auf Rollbahnen in die Lagerstrecke eingebracht werden.

Bild 1 zeigt eine typische Rollenbahn 3 eines Durchlaufregals für Gegenstände wie Produkte, Waren, Behälter, Paletten etc. 1 gemäß einer ersten Ausführungsform der vorliegenden Erfindung. Die mit einem RFID-Transponder 2 versehenen Gegenstände 1 werden in die Eingabe gestellt und erfasst. Die Eingabeerkennung wird entweder mit oder ohne einen Präsenzsensor 13 durchgeführt. Ohne Präsenzsensor muss sich die im Eingangsbereich angebrachte RFID-Antenne ständig im Lesebetrieb (polling) befinden, um zu registrieren, ob sich ein RFID-Transponder 2 im Erkennungsbereich der stationär am Eingabebereich angebrachten RFID-Antenne 5 befindet. Mit Präsenzsensor 13 muss die RFID-Antenne 5 nur lesen, wenn der Präsenzsensor eine Änderung meldet und kann damit Strom sparen. Präsenzsensoren ermitteln dabei lediglich, ob sich ein Gegenstand mit oder ohne RFID-Transponder in ihrer Reichweite befindet. Der Gegenstand 1 wird durch eine Halteeinrichtung 4, z.B. ein mechanischer Bolzen oder ein Magnet, solange gehalten bis dieser mittels RFID identifiziert werden konnte.

Bild 2 und 3 zeigen Beispiele für ein- und ausgangsseitige Rückmeldungsoptionen. Die Rückmeldung kann eingangsseitig z.B. über ein akustisches oder optisches Signal (7, 8, 9) erfolgen. Auch eine Rückmeldung über eine andere Schnittstelle ist möglich. Im Falle der versuchten Eingabe eines nicht zugelassenen Gegenstandes 1 gibt eine Warnleuchte 8 ein entsprechendes Signal, während der beanstandete Gegenstand durch die Haltevorrichtung 4 blockiert wird. Ausgabeseitig signalisiert die Hinweisleuchte 12, dass die korrekt gelagerten Gegenstände zur Ausgabe bereit sind. Sowohl eingabewie auch ausgabeseitig können zusätzlich oder alternativ Displays mit entsprechenden Hinweisen zum Einsatz kommen.

Bild 4 zeigt ein weiteres Beispiel einer typischen Rollenbahn 3 eines Durchlaufregals für Gegenstände 1 für den Fall, dass ein zugelassener Gegenstand eingegeben wurde. Da der Gegenstand nach dem Lesen seines RFID-Transponders als für die Rollenbahn zugelassen identifiziert wurde, gibt die Haltevorrichtung den Gegenstand frei, der nun auf der abschüssigen Rollenbahn in den Lagerbestand in Richtung Ausgabe gleitet. Fällt die Prüfung negativ aus, muss der Gegenstand 1 entfernt werden. Darf der Gegenstand 1 einfahren, wird der Lagerbestand des Durchlaufregals erhöht und im Auswertesystem erfasst. Im Übrigen ist die beschriebene Lagerverwaltung nicht auf ein Durchlaufregal beschränkt, sondern Gruppen von Regalen, die nebeneinander oder übereinander angeordnete Durchlaufregale umfassen, sind denkbar. In diesem Fall werden die Lagerbestände der einzelnen Durchlaufregale zentral erfasst und entsprechend verbucht.

Bild 5 und 6 zeigen Beispiele für ein- und ausgangsseitige Rückmeldungsoptionen für den Fall, dass eine richtige Artikeleingabe erfolgt ist. Die Rückmeldung kann eingangs- wie auch ausgangsseitig z.B. über ein akustisches oder optisches Signal (7, 8, 9) erfolgen. Auch eine Rückmeldung über eine andere Schnittstelle wie etwa ein internes Buchungssystem ist möglich. In diesem Fall kann u. U. auf eine etwaige Systemrückmeldungen verzichtet werden. Im Falle der Eingabe eines zugelassenen Gegenstandes 1 gibt eine Hinweisleuchte 9 ein entsprechendes Signal, während der zugelassene Gegenstand ungehindert in die Lagerstrecke läuft. Ausgabeseitig signalisiert wieder die Hinweisleuchte 12, dass die korrekt gelagerten Gegenstände zur Ausgabe bereit sind. Sowohl eingabe- wie auch ausgabeseitig können wieder zusätzlich oder alternativ Displays mit entsprechenden Hinweisen zum Einsatz kommen.

Bild 7 zeigt ein weiteres Beispiel einer typischen Rollenbahn eines Durchlaufregals für Gegenstände, die bereit zur Ausgabe sind, nachdem der vorderste Artikel als zugelassen registriert wurde.

Bild 8 und 9 zeigen wiederum Beispiele für ein- und ausgangsseitige Rückmeldungsoptionen für den Fall eines erfolgreichen Lagerungsvorgangs. Nachdem der Transponder eingangsseitig nicht mehr gelesen werden kann, da der Gegenstand in die Lagerstrecke eingefahren und die erste RFID-Antenne im Eingangsbereich bereits passiert hat, werden auch keine Statushinweise signalisiert und die Leuchten 8 bzw. 9 sind nicht erleuchtet. Die Hinweisleuchte 12 in Bild 9 dagegen signalisiert ausgabeseitig, dass die korrekt gelagerten Gegenstände zur Ausgabe bereit sind.

Bild 10 zeigt ein weiteres Beispiel einer typischen Rollenbahn 3 eines Durchlaufregals für Gegenstände 1 für den Fall, dass ein Artikel auf der Ausgabeseite entnommen wird. Die Entnahme wird nun analog zur Eingabe-Situation in Bild 1 dadurch erkannt, dass der RFID-Transponder 2 nicht mehr gelesen werden kann und /oder der Präsenzsensor 14 eine Änderung meldet. Da zu diesem Zeitpunkt ein darauf folgender Artikel den Wirkbereich der zweiten RFID-Antenne 6 noch nicht erreicht hat und damit kein weiterer RFID-Transponder gelesen wird oder ein Präsenzsensor eine Änderung meldet, wird der Lagerbestand des Durchlaufregals im Auswertesystem entsprechend reduziert.

Bild 11 und 12 zeigen Beispiele für ein- und ausgangsseitige Rückmeldungsoptionen für den im Bild 10 beschriebenen Lagerungsvorgangs. Da der in diesem Fall anrollende Artikel noch nicht registriert ist, signalisiert die Warnleuchte 12 in Bild 12, dass noch keine Ausgabebereitschaft vorliegt.

Bild 13 zeigt eine typische Lagerstrecke für Gegenstände 1 gemäß einer zweiten Ausführungsform der vorliegenden Erfindung, mit dem Unterschied, dass die Lagerstrecke statt aus einem Regal mit Rollbahnen aus einer Bahn besteht, um darin Rollwägen zu verschieben und zu lagern. Die oben beschriebenen Ausführungsbeispiele einer ersten Ausführungsform der vorliegenden Erfindung sind auch anwendbar für diese zweite Ausführungsform der vorliegenden Erfindung.

Generell kann das in den obigen Ausführungsbeispielen beschriebene Befüllen oder Entnehmen der Gegenstände 1 auch als Buchungsmeldung an ein ERP-System weitergegeben werden.

Die vorliegende Erfindung ist nicht auf die dargestellten Ausführungsbeispiele beschränkt, vielmehr können ein oder mehrere Merkmale eines Ausführungsbeispiels auch in einem anderen Ausführungsbeispiel verwendet werden.

## Patentansprüche

1. Radiofrequenz-Identifikations-Kommunikationssystem, RFID-Kommunikationssystem, zur Bestandüberwachung eines Durchlauflagers, umfassend:
mindestens eine erste und eine zweite stationäre RFID-Antenne (5, 6) zum Senden und Empfangen von Daten; und
einen an einem Gegenstand oder einer Gruppe von Gegenständen (1) angebrachten RFID-Transponder (2),
wobei der RFID-Transponder (2) mindestens eine Kennung des Gegenstands oder der Gruppe von Gegenständen (1) elektronisch speichert, und
wobei die erste RFID-Antenne (5) an einem Eingabebereich und die zweite FRID-Antenne (6) an einem Ausgabebereich einer Lagerstrecke des Durchlauflagers platziert sind, um den Gegenstand oder die Gruppe von Gegenständen (1) anhand der Kennung des RFID-Transponders (2) zu erfassen und
mindestens einen Präsenzsensor (13, 14), um die Präsenz eines Gegenstandes oder einer Gruppe von Gegenständen im Ein- und Ausgabebereich der Lagerstrecke zu erfassen, wobei ein erster Präsenzsensor (13) am Eingabebereich und ein zweiter Präsenzsensor (14) am Ausgabebereich (6) der Lagerstrecke des Durchlauflagers platziert ist, wobei der wenigstens eine Präsenzsensor lediglich ermittelt, ob sich ein Gegenstand mit oder ohne RFID-Transponder in seiner Reichweite befindet,
wobei die RFID-Antennen (5, 6) nur einen Lesemodus zum Erfassen der RFID-Transponder aktivieren, wenn die Präsenzsensoren (13, 14) eine Änderung melden,
wobei der Gegenstand oder die Gruppe von Gegenständen (1) im Eingabebereich durch eine Halteeinrichtung (4) solange gehalten werden, bis diese mittels der Kennung des RFID-Transponders (2) identifiziert sind.

2. RFID-Kommunikationssystem gemäß Anspruch 1, wobei der Gegenstand oder die Gruppe von Gegenständen aus Behältern oder Paletten (1) besteht.

3. RFID-Kommunikationssystem gemäß Anspruch 2, wobei die Lagerstrecke aus einem Regal mit einer Rollbahn besteht, um die Behälter oder Paletten (1) aufzunehmen.

4. RFID-Kommunikationssystem gemäß Anspruch 1, wobei der Gegenstand oder die Gruppe von Gegenständen auf Rollwägen aufliegt.

5. RFID-Kommunikationssystem gemäß Anspruch 4, wobei die Lagerstrecke aus einer Bahn besteht, um darin die Rollwägen zu verschieben und zu lagern.

6. RFID-Kommunikationssystem gemäß Anspruch 1, wobei der Gegenstand oder die Gruppe von Gegenständen (1) anhand der Kennung des RFID-Transponders (2) dahingehend prüfbar sind, ob der Gegenstand oder die Gruppe von Gegenständen für die Lagerstrecke zugelassen sind.

7. RFID-Kommunikationssystem gemäß Anspruch 6, wobei die Halteeinrichtung den Gegenstand oder die Gruppe von Gegenständen (1) je nach Ergebnis der Prüfung freigibt oder blockiert.

8. RFID-Kommunikationssystem gemäß Anspruch 7, wobei ein Lagerbestand der Lagerstrecke erhöht wird, wenn die Halteeinrichtung den Gegenstand oder die Gruppe von Gegenständen freigibt.

9. RFID-Kommunikationssystem gemäß Anspruch 8, wobei der Lagerbestand der Lagerstrecke reduziert wird, wenn der Gegenstand oder die Grupp von Gegenständen der Lagerstrecke nach Passieren der zweiten RFID-Antenne entnommen wird.

10. RFID-Kommunikationssystem gemäß Anspruch 9, wobei die Entnahme dadurch erkennbar ist, dass der RFID-Tranponder 2 nicht mehr lesbar ist und/oder der Präsenzsensor eine Änderungmeldet.

11. RFID-Kommunikationssystem gemäß einem der Ansprüche 1 bis 10, wobei die Halteeinrichtung (4) aus einem mechanischen Bolzen besteht.

12. RFID-Kommunikationssystem gemäß einem der Ansprüche 1 bis 10, wobei die Halteeinrichtung (4) aus einem Magneten besteht.

13. RFID-Kommunikationssystem gemäß Anspruch 1, wobei das System eine Rückmeldung erzeugt, wenn die erste RFID-Antenne den Gegenstand oder die Gruppe von Gegenständen identifiziert hat.

14. RFID-Kommunikationssystem gemäß Anspruch 13, wobei die Rückmeldung über ein akustisches oder optisches Signal (7, 8, 9) erfolgt.

15. RFID-Kommunikationssystem gemäß Anspruch 1, wobei das System eine Rückmeldung erzeugt, wenn die zweite RFID-Antenne den Gegenstand oder die Gruppe von Gegenständen vor Entnahme identifiziert hat.

16. RFID-Kommunikationssystem gemäß Anspruch 15, wobei die Rückmeldung über ein akustisches oder optisches Signal (10, 11, 12) erfolgt.

## Claims

1. A radio frequency identification communication system, RFID communication system, for inventory monitoring of a flow-through warehouse, comprising:
at least a first and a second stationary RFID antenna (5, 6) for transmitting and receiving data; and
a RFID transponder (2) attached to an object or group of objects (1),
wherein the RFID transponder (2) electronically stores at least one identifier of the object or group of objects (1), and
wherein the first RFID antenna (5) is placed at an input area and the second RFID antenna (6) is placed at an output area of a storage section of the flow-through warehouse to detect the object or group of objects (1) based on the identification of the RFID transponder (2), and
at least one presence sensor (13, 14) for detecting the presence of an object or a group of objects in the input and output area of the storage section, wherein a first presence sensor (13) is placed at the input area and a second presence sensor (14) is placed at the output area (6) of the storage section of the flow-through warehouse wherein the at least one presence sensor only determines whether an object with or without an RFID transponder is within its range, wherein the RFID antennas (5, 6) only activate a read mode for detecting the RFID transponders when the presence sensors (13, 14) report a change,
wherein the object or group of objects (1) is held in the input area by a holding device (4) until it is identified by means of the identifier of the RFID transponder (2).

2. RFID communication system according to claim 1, wherein the object or group of objects consists of containers or pallets (1).

3. RFID communication system according to claim 2, wherein the storage section consists of a rack with a roller conveyor to receive the containers or pallets (1).

4. RFID communication system according to claim 1, wherein the object or group of objects rests on rolling carts.

5. RFID communication system according to claim 4, wherein the storage section consists of a track to move and store the rolling carts therein.

6. RFID communication system according to claim 1, wherein the object or group of objects (1) is checkable by the identifier of the RFID transponder (2) as to whether the object or group of objects is approved for the storage section.

7. RFID communication system according to claim 6, wherein the holding device releases or blocks the object or group of objects (1) depending on the result of the check.

8. RFID communication system of claim 7, wherein an inventory of the storage section is increased when the holding device releases the object or group of objects.

9. RFID communication system of claim 8, wherein the inventory of the storage section is reduced when the object or group of objects is removed from the storage section after passing the second RFID antenna.

10. RFID communication system according to claim 9, wherein the removal is detectable by the RFID transponder (2) no longer being readable and/or the presence sensor reporting a change.

11. RFID communication system according to any one of claims 1 to 10, wherein the holding device (4) comprises a mechanical bolt.

12. RFID communication system according to any one of claims 1 to 10, wherein the holding device (4) comprises a magnet.

13. RFID communication system of claim 1, wherein the system generates feedback when the first RFID antenna has identified the object or group of objects.

14. RFID communication system according to claim 13, wherein the feedback is provided via an acoustic or optical signal (7, 8, 9).

15. RFID communication system of claim 1, wherein the system generates a feedback when the second RFID antenna has identified the object or group of objects prior to removal.

16. RFID communication system according to claim 15, wherein the feedback is provided via an acoustic or optical signal (10, 11, 12).

## Revendications

1. Système de communication d'identification par radiofréquence, système de communication RFID, pour la surveillance des stocks d'un magasin à flux continu, comprenant :
au moins une première et une deuxième antennes RFID fixes (5, 6) pour l'émission et la réception de données ; et
un transpondeur RFID (2) fixé à un objet ou à un groupe d'objets (1),
dans lequel le transpondeur RFID (2) stocke électroniquement au moins un identifiant de l'objet ou du groupe d'objets (1), et
dans lequel la première antenne RFID (5) est placée au niveau d'une zone d'entrée et la seconde antenne RFID (6) est placée au niveau d'une zone de sortie d'une section de stockage du magasin à flux continu, afin de détecter l'objet ou le groupe d'objets (1) à l'aide de l'identification du transpondeur RFID (2) et
au moins un capteur de présence (13, 14) pour détecter la présence d'un objet ou d'un groupe d'objets dans la zone d'entrée et de sortie de la section de stockage, un premier capteur de présence (13) étant placé dans la zone d'entrée et un deuxième capteur de présence (14) dans la zone de sortie (6) de la section de stockage du magasin à flux continu, l'au moins un capteur de présence détermine uniquement si un objet avec ou sans transpondeur RFID se trouve à sa portée, les antennes RFID (5, 6) n'activant un mode de lecture pour détecter les transpondeurs RFID que lorsque les capteurs de présence (13, 14) signalent un changement,
l'objet ou le groupe d'objets (1) étant maintenu dans la zone d'entrée par un dispositif de maintien (4) jusqu'à ce qu'ils soient identifiés au moyen de l'identification du transpondeur RFID (2).

2. Système de communication RFID selon la revendication 1, dans lequel l'objet ou le groupe d'objets est constitué de conteneurs ou de palettes (1).

3. Système de communication RFID selon la revendication 2, dans lequel la section de stockage est constitué d'une étagère avec un chemin de roulement pour recevoir les conteneurs ou les palettes (1).

4. Système de communication RFID selon la revendication 1, dans lequel l'objet ou le groupe d'objets repose sur des chariots roulants.

5. Système de communication RFID selon la revendication 4, dans lequel la section de stockage consiste en une voie pour y déplacer et stocker les chariots à roulettes.

6. Système de communication RFID selon la revendication 1, dans lequel l'objet ou le groupe d'objets (1) peut être contrôlé à l'aide de l'identification du transpondeur RFID (2) pour déterminer si l'objet ou le groupe d'objets est autorisé à emprunter la section de stockage.

7. Système de communication RFID selon la revendication 6, dans lequel le dispositif de maintien libère ou bloque l'objet ou le groupe d'objets (1) en fonction du résultat du contrôle.

8. Système de communication RFID selon la revendication 7, dans lequel un stock de la section de stockage est augmenté lorsque le dispositif de maintien libère l'objet ou le groupe d'objets.

9. Système de communication RFID selon la revendication 8, dans lequel le stock de la section de stockage est réduit lorsque l'objet ou le groupe d'objets est retiré de la section de stockage après être passé par la deuxième antenne RFID.

10. Système de communication RFID selon la revendication 9, dans lequel le prélèvement est reconnaissable au fait que le transpondeur RFID (2) n'est plus lisible et/ou que le capteur de présence signale une modification.

11. Système de communication RFID selon l'une quelconque des revendications 1 à 10, dans lequel le dispositif de maintien (4) est constitué par un boulon mécanique.

12. Système de communication RFID selon l'une des revendications 1 à 10, dans lequel le dispositif de maintien (4) est constitué d'un aimant.

13. Système de communication RFID selon la revendication 1, dans lequel le système génère un retour d'information lorsque la première antenne RFID a identifié l'objet ou le groupe d'objets.

14. Système de communication RFID selon la revendication 13, dans lequel le retour d'information se fait par un signal acoustique ou optique (7, 8, 9).

15. Système de communication RFID selon la revendication 1, dans lequel le système génère un retour d'information lorsque la deuxième antenne RFID a identifié l'objet ou le groupe d'objets avant leur retrait.

16. Système de communication RFID selon la revendication 15, dans lequel le retour d'information se fait par un signal acoustique ou optique (10, 11, 12).
